(19) Europäisches Patentamt
European Patent Office
Office européen des brevets

(11) **EP 1 387 463 B1**

(12) **EUROPÄISCHE PATENTSCHRIFT**

(45) Veröffentlichungstag und Bekanntmachung des Hinweises auf die Patenterteilung:
**16.07.2008 Patentblatt 2008/29**

(51) Int Cl.:
*G05B 19/042* *(2006.01)* *H01H 9/16* *(2006.01)*

(21) Anmeldenummer: **03016435.4**

(22) Anmeldetag: **21.07.2003**

(54) **Vorrichtung und Verfahren zur sicheren Schalterstellungserkennung eines Drehschalters**

Method and device for certain switch position identification of a rotary switch

Procédé et dispositif pour reconnaitre avec certitude la position d'un interrupteur rotatif

(84) Benannte Vertragsstaaten:
**DE FR GB**

(30) Priorität: **02.08.2002 DE 10235502**

(43) Veröffentlichungstag der Anmeldung:
**04.02.2004 Patentblatt 2004/06**

(73) Patentinhaber: **SIEMENS AKTIENGESELLSCHAFT**
**80333 München (DE)**

(72) Erfinder:
• **Schwesig, Günter**
**91054 Erlangen (DE)**
• **Seeger, Guido, Dr.**
**91083 Baiersdorf (DE)**

(56) Entgegenhaltungen:
**US-A- 5 444 613**

**Beschreibung**

Die Erfindung bezieht sich auf eine Vorrichtung und ein Verfahren zur sicheren Schalterstellungserkennung eines Drehschalters, wobei aus zwei analogen Schalterstellungswinkel abbildenden Schalterstellungsistwertsignale mit jeweils vorgegebenen Amplitudenverlauf jeweils mittels zweier redundant aufgebauten Recheneinheiten diskrete Schalterstellungen des Drehschalters bestimmt und von jeder Recheneinheit separat auf Plausibilität überprüft werden, wobei mittels eines Vergleiches der von der ersten und zweiten Recheneinheit bestimmten Schalterstellungen, fehlerhafte Schalterstellungen erkannt werden.

In der Elektrotechnik werden manuell betätigbare Drehschalter für die unterschiedlichsten Aufgaben, z.B. für das Einlesen von Parametern für elektronische Steuerungen, eingesetzt. Die Drehschalter sind mit einem Kontakt-/Sensorsystem und mit einer Rastmechanik versehen. Die Rastmechanik bestimmt die Anzahl der möglichen Schalterstellung und den Winkel zwischen Links- und Rechtsanschlag, sofern von einem Anschlag Gebrauch gemacht werden soll. Über eine an den Schalter angeschlossene Weiterverarbeitungselektronik wird das Kontakt-/Sensorsystem ausgewertet bzw. die Schalterstellung ermittelt. Bei einem Elektroherd bestimmt beispielsweise die Schalterstellung die Heizleistung der jeweiligen zugeordneten Kochplatte.

Zum Anwählen oder Umschalten von sicherheitsrelevanten Funktionen werden nach heutigem Stand der Technik üblicherweise Drehschalter mit redundant ausgeführten, galvanisch getrennten Kontakten verwendet. Die Kontakte werden dabei jeweils separat an eine redundante Steuerung angeschlossen, welche die Schalterstellung entsprechend der vom Drehschalter erzeugten Ausgangskodierung, in Gray-/Hexkodierung oder auch direkt uncodiert einliest, auswertet und weiterverarbeitet. Über einen Vergleich der beiden eingelesenen Schalterstellungswerte werden Einlesefehler, Verdrahtungsdefekte und Schalterfehler erkannt.

Solche aus dem Stand der Technik bekannten Drehschalter mit redundant ausgeführten Kontakten weisen mehrere Nachteile auf. Sie sind kostenintensiv, haben ein größeres Bauvolumen, erfordern einen erheblichen Verkabelungsaufwand und benötigen je nach Anzahl der Schalterstellungen eine entsprechende, gegebenenfalls hohe Anzahl von redundanten Ausgängen, denen eine entsprechende Anzahl von redundanten Eingängen der Steuerung gegenüber steht.

In einer früheren Patentanmeldung der Anmelderin ist bereits ein manuell betätigbarer, kontaktloser Drehschalter mit variabler Rastung vorgeschlagen worden. Ein solcher liefert zur Winkelstellungsbestimmung über eine Sensorik zwei analoge, um 90° phasenverschobene, sinusförmige Schalterstellungsistwertsignale mit konstanter Amplitude.

Aus der deutschen Patentschrift DE 100 09 707 A1 ist eine Sicherheitsschaltvorrichtung mit einem ersten und zweiten Eingangsschalter, deren jeweilige Schalterstellung redundant zueinander eine eingangsseitige Stellgröße definieren bekannt.

Aus der deutschen Patentschrift DE 198 26 875 A1 ist eine numerische Steuerung mit einem räumlich getrennten Eingabegerät bei der eine redundante Vorverarbeitung der Benutzereingaben erfolgt, bekannt. Hierfür werden die Ausgangssignale aller Eingabemittel an zwei Prozessoren weitergeleitet und beide Prozessoren ermitteln aus den Benutzereingaben Daten zum wechselseitigen Vergleich auf Übereinstimmung.

Der Erfindung liegt die Aufgabe zugrunde, eine Vorrichtung und ein Verfahren zur sicheren, einfachen, kostengünstigen und mit geringem Verkabelungsaufwand verbundenen Schalterstellungserkennung eines Drehschalters zu schaffen, der als Ausgangssignale zwei sinusförmige, analoge, schalterstellungswinkelabbildenden Schalterstellungsistwertsignale mit jeweils vorgegebenen Amplitudenverlauf aufweist.

Gemäß der Erfindung wird diese Aufgabe für eine Vorrichtung dadurch gelöst, dass die Plausibilitätsüberprüfung, falls die beiden digitalisierten Schalterstellungsistwertsignale zur ersten Recheneinheit bzw. die beiden digitalisierten Schalterstellungsistwertsignale zur zweiten Recheneinheit in Form von jeweils um 90° gegeneinander phasenverschobenen sinusförmigen Signalen gegeben sind und jeweils die Amplituden der beiden Signale zur ersten Recheneinheit und zur zweiten Recheneinheit konstant sind, in der Art erfolgt, dass auf Plausibilität der Signale erkannt wird, wenn die Summe der jeweiligen Quadrate der digitalisierten Schalterstellungsistwertsignale zur ersten Recheneinheit bzw. die Summe der jeweiligen Quadrate der digitalisierten Schalterstellungsistwertsignale zur zweiten Recheneinheit in einem definierten Bereich liegt.

Für ein Verfahren zur sicheren Schalterstellungserkennung eines Drehschalters wird die obengenannte Aufgabe erfindungsgemäß dadurch gelöst, dass die Plausibilitätsüberprüfung, falls die beiden digitalisierten Schalterstellungsistwertsignale zur ersten Recheneinheit bzw. die beiden digitalisierten Schalterstellungsistwertsignale zur zweiten Recheneinheit in Form von jeweils um 90° gegeneinander phasenverschobenen sinusförmigen Signalen gegeben sind und jeweils die Amplituden der beiden Signale zur ersten Recheneinheit und zur zweiten Recheneinheit konstant sind, in der Art erfolgt, dass auf Plausibilität der Signale erkannt wird, wenn die Summe der jeweiligen Quadrate der digitalisierten Schalterstellungsistwertsignale zur ersten Recheneinheit bzw. wenn die Summe der jeweiligen Quadrate der digitalisierten Schalterstellungsistwertsignale zur zweiten Recheneinheit in einem definierten Bereich liegt.

Derartige analoge Schalterstellungsistwertsignale können in besonders einfacher weise sinusförmig realisiert werden, prinzipiell ist aber auch eine Verwendung dreieckförmiger Signale denkbar.

Wenn die beiden Schalterstellungsistwertsignale um 90° gegeneinander phasenverschoben sind, können mit Hilfe einfacher trigometrischer Beziehungen aus den beiden Schalterstellungsistwertsignalen die Schalterstellungspositionen bzw. die Schalterstellungswinkel berechnet werden.

Es ist vorteilhaft, dass die Plausibilitätsüberprüfung, falls die beiden digitalisierten Schalterstellungsistwertsignale zur ersten Recheneinheit bzw. die beiden digitalisierten Schalterstellungsistwertsignale zur zweiten Recheneinheit in Form von jeweils um 90° gegeneinander phasenverschobenen sinusförmigen Signalen gegeben sind und jeweils die Amplituden der beiden Signale zur ersten Recheneinheit und zur zweiten Recheneinheit konstant sind, in der Art erfolgt, dass auf Plausibilität der Signale erkannt wird, wenn die Summe der jeweiligen Quadrate der digitalisierten Schalterstellungsistwertsignale zur ersten Recheneinheit bzw. wenn die Summe der jeweiligen Quadrate der digitalisierten Schalterstellungsistwertsignale zur zweiten Recheneinheit in einem definierten Bereich liegt. Die Erfinder haben hier erkannt, dass mit Hilfe einer solchen einfach durchzuführenden Plausibilitätsprüfung z.B. ein Leitungsbruch eines Schalteristwertsignals leicht erkannt werden kann.

Eine erste vorteilhafte Ausgestaltung des erfindungsgemäßen Verfahrens ist dadurch gekennzeichnet, dass im Falle einer ungenügenden Plausibilität die digitalisierten Schalterstellungsistwertsignale zur ersten Recheneinheit bzw. die digitalisierten Schalterstellungsistwertsignale zur zweiten Recheneinheit als fehlerhaft erkannt werden bzw. die daraus ermittelte Schalterstellungen als fehlerhaft erkannt werden und je nach Fehlerschwere zugeordnete Maßnahmen ergriffen werden.

Die Erfinder haben in diesem Zusammenhang erkannt, dass bei Fehlern der Plausibilität des jeweiligen digitalisierten Schalterstellungssignal schon im Vorfeld die ermittelte Schalterstellung als fehlerhaft erkannt werden kann und je nach Fehlerschwere zugeordnete Maßnahme ergriffen werden müssen. Eine solche Maßnahme kann z.B. darin bestehen, die zugeordnete Recheneinheit abzuschalten.

Eine weitere vorteilhafte Ausbildung des erfindungsgemäßen Verfahrens ist, wobei die beiden Schalterstellungsistwertsignale sinusförmig sind, dadurch gekennzeichnet, dass Schalterstellungen in Form von Schalterstellungswinkeln $\propto$ durch die Beziehung

$$\propto = \text{arctan } [X1/Y1],$$

wobei X1 dem ersten digitalisierten Schalterstellungsistwertsignal zur ersten Recheneinheit und Y1 dem zweiten digitalisiertes Schalterstellungsistwertsignal zur ersten Recheneinheit entspricht, in der ersten Recheneinheit bzw.

$$\propto = \text{arctan } [X2/Y2],$$

wobei X2 dem ersten digitalisierten Schalterstellungsistwertsignal zur zweiten Recheneinheit und Y2 dem zweiten digitalisierten Schalterstellungsistwertsignal zur zweiten Recheneinheit entspricht, in der zweiten Recheneinheit getrennt berechnet werden, wobei jeweils bei jeder Recheneinheit, das jeweilige erste digitalisierte Schalterstellungsistwertsignal dem jeweiligen zweiten digitalisierten Schalterstellungsistwertsignal um 90° in der Phase nacheilt und jeweils die Amplituden der digitalisierten Schalterstellungsistwertsignale konstant sind. Hier haben die Erfinder vorteilhaft erkannt, dass sich mittels einer einfachen trigometrischen Grundfunktion aus den beiden Schalterstellungsistwertsignalen in jeder Recheneinheit jeweils ein Schalterstellungswinkel $\alpha$ berechnen lässt.

Eine weitere vorteilhafte Ausführung der Erfindung ist dadurch gekennzeichnet, dass aus den Schalterstellungswinkel $\alpha$ mittels einer Überprüfung in welchen entsprechend den Rastposition des Drehschalters definierten Winkelbereichen, die Schalterstellungswinkel $\alpha$ liegen, zu den Rastpositionen korrespondierende diskrete Schaltungswinkel $\alpha_D$ bestimmt werden. Mit Hilfe einer solchen diskreten Schalterstellungswinkelbestimmung ist es möglich, aus nur zwei analogen Schalteristwertsignalen, auf einfache Art und Weise, entsprechend den Rastposition des Drehschalters, diskrete Schalterstellungswinkel $\alpha_D$ zu bestimmen.

Ferner erweist es sich für das erfindungsgemäße Verfahren als vorteilhaft, wenn die berechneten Schalterstellungswinkel $\propto$ bzw. die diskreten Schalterstellungswinkel $\alpha_D$ zwischen den beiden Recheneinheiten ausgetauscht und kreuzweise miteinander verglichen werden. Auf diese Art und Weise ist sichergestellt, dass jede Recheneinheit separat solchermaßen fehlerhaft erkannte Schalterstellungswinkel $\propto$ bzw. solchermaßen fehlerhaft erkannte diskrete Schalterstellungswinkel $\alpha_D$ erkennen kann.

Ferner erweist es sich für das erfindungsgemäße Verfahren von Vorteil, falls der Vergleich nur eine unzureichende Übereinstimmung der berechneten Schalterstellungswinkel $\propto$ bzw. diskrete Schalterstellungswinkeln $\alpha_D$ ergibt, die ermittelten Schalterstellungen als fehlerhaft erkannt werden und je nach Fehlerschwere zugeordnete Maßnahme ergriffen werden um z.B. Auswirkungen auf einen nachfolgenden Prozess zu minimieren. Die Maßnahmen können z.B. gegebenenfalls nur in einer Warnung oder aber z.B. bei größeren Abweichungen auch in einer Abschaltung des gesamten nachliegenden Prozesses bestehen.

Die erfindungsgemäße Vorrichtung und das Verfahren eignet sich besonders zur Verwendung in industriellen Steuerungen, da dort eine sichere Schalterstellungserkennung eines Drehschalters, der lediglich die zwei oben beschriebenen analogen Ausgänge aufweist, besonders von Vorteil ist. Bei z.B. einer Verwendung des Drehschalters zum Einbau in Maschinensteuertafeln bei Werkzeug- oder Produktionsmaschinen als sogenannter Override-Drehschalter, um die Spindel- oder Drehgeschwindigkeit bedarfsweiße zu beeinflussen. Wenn dabei eine Begrenzung erfolgt, kann mit der Erfindung eine hohe Sicherheit der Schalterstellungserkennung des Drehschalters gewährleistet werden.

Ein Ausführungsbeispiel der Erfindung ist in der Zeichnung dargestellt und wird im folgenden näher erläutert.

Dabei zeigt die Figur in Form eines Blockschaltbildes die erfindungsgemäße Vorrichtung. Ein Drehschalter 1 erzeugt mit Hilfe einer geberinternen magnetischen, optischen oder kapazitiven Sensorik, die der Übersichtlichkeit halber nicht dargestellt ist, zwei sinusförmige analoge schalterstellungswinkelabbildende, um 90° gegeneinander phasenverschobene Schalterstellungsistwertsignale 2a und 2b mit konstanter identischer Amplitude. Das Schalterstellungsistwertsignal 2a ist dabei in der Form konstante Amplitude * sinus [α] gegeben. Das Schalterstellungssignal 2b ist in der Form konstante Amplitude * cosinus [α] gegeben. Mit α ist dabei der Schalterstellungswinkel bezeichnet. Die beiden Schalterstellungsistwertsignale 2a und 2b werden über zwei Klemmen 8a und 8b jeweils getrennt zwei redundant aufgebauten Messwerterfassungseinrichtungen 3a und 3b zugeführt. In diesen werden die Signalpegel der Schalterstellungsistwertsignale 2a und 2b jeweils mit Hilfe einer Elektronik an den Eingangssignalbereich eines messwerterfassungseinrichtungsinternen Analog-Digital-Wandlers angepasst. Anschließend erfolgt in den jeweiligen Messwerterfassungseinrichtungen 3a und 3b eine Analog-Digital-Wandlung der jeweiligen Schalterstellungsistwertsignale 2a und 2b, so dass für die weitere Verarbeitung digitalisierte Schalteristwertsignale 5a, 5b, 5c und 5d zur Verfügung stehen. Die digitalisierten Schalteristwertsignale 5a und 5b werden zur einer Recheneinheit 4a weitergeleitet. Die digitalisierten Schalteristwertsignale 5c und 5d werden zu einer Recheneinheit 4b, welche redundant zur Recheneinheit 4a aufgebaut ist, weitergeleitet. Die Recheneinheiten 4a und 4b sind zum Austausch von Daten miteinander verbunden.

Das Verfahren zur sicheren Schalterstellungserkennung eines Drehschalters 1 wird in den Recheneinheiten 4a und 4b jeweils getrennt durchgeführt. Zunächst werden die digitalisierten Schalterstellungsistwertsignale 5a und 5b von der Recheneinheit 4a auf Plausibilität überprüft. Hierzu wird das digitalisierte Schalteristwertsignal 5a quadriert, das digitalisierte Schalteristwertsignal 5b quadriert und anschließend die Summe der beiden quadrierten Signale berechnet. Die digitalisierten Schalteristwertsignale 5a und 5b gelten als plausibel, wenn die Summe in einen definierten Bereich liegt. Werden die digitalisierten Schalterstellungsistwertsignale 5a und 5b als nicht-plausibel erkannt, dann kann die Schalterstellung des Drehschalters 1 nicht sicher erkannt werden, was zur Folge hat, dass die ermittelte Schalterstellung gegebenenfalls für die weitere Prozessverarbeitung gesperrt und eine Fehlermelder ausgegeben wird.

Äquivalent hierzu wird gleichzeitig in Recheneinheit 4b die digitalisierten Schalterstellungssignale 5c und 5d auf Plausibilität überprüft und bei Nichterkennung auf Plausibilität entsprechend oben genanntem verfahren.

Anschließend wird in der Recheneinheit 4a und 4b jeweils ein Schalterstellungswinkel α berechnet. In der Recheneinheit 4a wird der Schalterstellungswinkel α entsprechend der Beziehung α = arctan [digitalisiertes Schalteristwertsignal 5a geteilt durch digitalisiertes Schalteristwertsignal 5b] berechnet. In der Recheneinheit 4b wird äquivalent hierzu der Schalterstellungswinkel α entsprechend der Beziehung α = [digitalisiertes Schalterstellungsistwertsignal 5c geteilt durch digitalisiertes Schalterstellungssignal 5d] berechnet.

Anschließend werden in jeder Recheneinheit 4a und 4b getrennt aus den jeweiligen Schalterstellungswinkeln α zu den Rastposition korrespondierende diskrete Schalterstellungswinkel $\alpha_D$ berechnet. Hierzu wird überprüft, in welchen, entsprechend den Rastpositionen des Drehschalters definierten Winkelbereichen, die Schalterstellungswinkel α liegen. Zu jeder Rastposition des Drehschalters wird somit ein korrespondierender, diskreter Schalterstellungswinkel $\alpha_D$ bestimmt. Falls der Drehschalter keine Rastungen aufweist oder die Rasterung ausgeschaltet ist, dann kann die Funktion der diskreten Schalterstellungswinkelbestimmung auch wahlweise abgeschaltet werden.

Anschließend werden die Schalterstellungswinkel ∝ bzw. die diskreten Schalterstellungswinkel $\alpha_D$ zwischen den beiden Recheneinheiten 4a und 4b über eine Verbindung 10 ausgetauscht und kreuzweise miteinander verglichen. Falls sich nur eine unzureichende Übereinstimmung der berechneten Schaltungswinkel ∝ bzw. der diskreten Schaltungswinkel $\alpha_D$ ergibt, dann werden die ermittelte Schalterstellung als fehlerhaft erkannt und für die weitere Verarbeitung gesperrt bzw. ein Warnsignal ausgegeben.

Entsprechend den jeweiligen Prozesserfordernissen kann dann der Prozess entweder sofort gestoppt werden oder z.B. die zuletzt als sicher erkannte Schalterstellung an den nachfolgenden Prozess weitergeleitet werden.

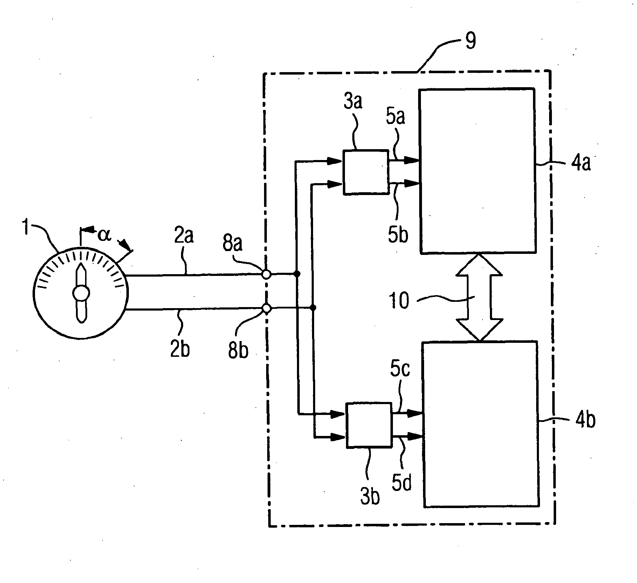

Die Klemmen 8a und 8b, die Messwerterfassungseinrichtungen 3a und 3b und die Recheneinheiten 4a und 4b bilden eine sogenannte "Sichere Steuerung" 9, die gemäß FIG 1 gestrichelt gezeichnet angedeutet ist.

An dieser Stelle sei noch darauf hin gewiesen, dass die beiden Schalterstellungsistwertsignale 2a und 2b prinzipiell beliebige Phasenverschiebungen wie z.B. 120° aufweisen können. Die Berechnung des Schalterstellungswinkels α und die Prüfung auf Plausibilität der digitalisierten Schalterstellungsistwertsignale 5a, 5b, 5c und 5d müssen dann entsprechend angepasst erfolgen.

## Patentansprüche

1. Vorrichtung zur sicheren Schaltungserkennung eines Drehschalters (1), wobei aus zwei analoge, schalterstellungswinkelabbildenden Schalterstellungsistwertsignale (2a, 2b) mit jeweils vorgegebenem Amplitudenverlauf jeweils mittels zweier redundant aufgebauten Recheneinheiten (4a,4b) diskrete Schalterstellungen des Drehschalters (1) bestimmt und von jeder Recheneinheit (4a, 4b) separat auf Plausibilität überprüft werden, wobei mittels eines Vergleichs der von der ersten und zweiten Recheneinheit bestimmten Schalterstellungen, fehlerhafte Schalterstellungen erkannt werden, **dadurch gekennzeichnet, dass** Mittel vorgesehen sind, so dass die Plausibilitätsüberprüfung, falls die beiden digitalisierten Schalterstellungsistwertsignale (5a, 5b) zur ersten Recheneinheit bzw. die beiden digitalisierten Schalterstellungsistwertsignale (5c, 5d) zur zweiten Recheneinheit in Form von jeweils um 90° gegeneinander phasenverschobenen sinusförmigen Signalen gegeben sind und jeweils die Amplituden der beiden Signale zur ersten Recheneinheit (4a) und zur zweiten Recheneinheit (4b) konstant sind, in der Art erfolgt, dass auf Plausibilität der Signale erkannt wird, wenn die Summe der jeweiligen Quadrate der digitalisierten Schalterstellungsistwertsignale (5a, 5b) zur ersten Recheneinheit (4a) bzw. die Summe der jeweiligen Quadrate der digitalisierten Schalterstellungsistwertsignale (5c, 5d) zur zweiten Recheneinheit (4b) in einem definierten Bereich liegt.

2. Verfahren zur sicheren Schalterstellungserkennung eines Drehschalters (1) aus zwei analogen, schalterstellungswinkelabbildenden Schalterstellungsistwertsignale (2a,2b) mit jeweils vorgegebenem Amplitudenverlauf jeweils mittels zweier redundant aufgebauten Recheneinheiten (4a,4b) diskrete Schalterstellungen des Drehschalters (1) bestimmt und von jeder Recheneinheit (4a,4b) separat auf Plausibilität überprüft werden, wobei mittels eines Vergleiches der von der ersten und zweiten Recheneinheit bestimmten Schalterstellungen, fehlerhafte Schalterstellungen erkannt werden, **dadurch gekennzeichnet , dass** die Plausibilitätsüberprüfung, falls die beiden digitalisierten Schalterstellungsistwertsignale (5a,5b) zur ersten Recheneinheit bzw. die beiden digitalisierten Schalterstellungsistwertsignale (5c,5d) zur zweiten Recheneinheit in Form von jeweils um 90° gegeneinander phasenverschobenen sinusförmigen Signalen gegeben sind und jeweils die Amplituden der beiden Signale zur ersten Recheneinheit (4a) und zur zweiten Recheneinheit (4b) konstant sind, in der Art erfolgt, dass auf Plausibilität der Signale erkannt wird, wenn die Summe der jeweiligen Quadrate der digitalisierten Schalterstellungsistwertsignale (5a,5b) zur ersten Recheneinheit (4a) bzw. wenn die Summe der jeweiligen Quadrate der digitalisierten Schalterstellungsistwertsignale (5c,5d) zur zweiten Recheneinheit (4b) in einem definierten Bereich liegt.

3. Verfahren nach Anspruch 2, **dadurch gekennzeichnet , dass** im Falle einer ungenügenden Plausibilität die digitalisierten Schalterstellungsistwertsignale (5a,5b) zur ersten Recheneinheit (4a) bzw. die digitalisierten Schalterstellungsistwertsignale (5c,5d) zur zweiten Recheneinheit (4b) als fehlerhaft erkannt werden bzw. die daraus ermittelte Schalterstellungen als fehlerhaft erkannt werden und je nach Fehlerschwere zugeordnete Maßnahmen ergriffen werden.

4. Verfahren nach Anspruch 2 oder 3, wobei die beiden Schalterstellungsistwertsignale (2a,2b) sinusförmig sind, **dadurch gekennzeichnet, dass** Schalterstellungen in Form von Schalterstellungswinkeln $\propto$ durch die Beziehung

$$\propto\ =\ \text{arctan}\ [X1/Y1],$$

wobei X1 dem ersten digitalisierten Schalterstellungsistwertsignal (5a) zur ersten Recheneinheit (4a) und Y1 dem zweiten digitalisiertes Schalterstellungsistwertsignal (5b) zur ersten Recheneinheit (4a) entspricht,
in der ersten Recheneinheit (4a) bzw.

$$\propto\ =\ \text{arctan}\ [X2/Y2],$$

wobei X2 dem ersten digitalisierten Schalterstellungsistwertsignal (5c) zur zweiten Recheneinheit (4b) und Y2 dem zweiten digitalisierten Schalterstellungsistwertsignal (5d) zur zweiten Recheneinheit (4b) entspricht,
in der zweiten Recheneinheit (4b) getrennt berechnet werden, wobei jeweils bei jeder Recheneinheit (4a,4b), das jeweilige erste digitalisierte Schalterstellungsistwertsignal (5a,5c) dem jeweiligen zweiten digitalisierten Schalterstellungsistwertsignal (5c, 5d) um 90° in der Phase nacheilt und jeweils die Amplituden der digitalisierten Schalterstellungsistwertsignal (5a, 5b, 5c, 5d) konstant sind.

5. Verfahren nach Anspruch 2, 3 oder 4, **dadurch gekennzeichnet , dass** aus den Schalterstellungswinkeln $\propto$ mittels einer Überprüfung in welchen entsprechend den Rastpositionen des Drehschalters definierten Wickelbereichen, die Schalterstellungswinkel $\propto$ liegen, zu den Rastpositionen korrespondierende diskrete Schalterstellungswinkel $\propto_D$ be-

stimmt werden.

6. Verfahren nach Anspruch 2 bis 5, **dadurch gekennzeichnet , dass** die berechneten Schalterstellungswinkel ∝ bzw. die diskreten Schalterstellungswinkel ∝_D zwischen den beiden Recheneinheiten (4a,4b) ausgetauscht und kreuzweise miteinander verglichen werden.

7. Verfahren nach Anspruch 6, **dadurch gekennzeichnet , dass**, falls der Vergleich nur eine unzureichende Übereinstimmung der berechneten Schalterstellungswinkel ∝ bzw. diskrete Schalterstellungswinkeln ∝_D ergibt, die ermittelten Schalterstellungen als fehlerhaft erkannt werden und je nach Fehlerschwere zugeordnete Maßnahmen ergriffen werden.

8. Verwendung der Vorrichtung und des Verfahrens nach einem der vorhergehenden Ansprüche in einer industriellen Steuerung.

**Claims**

1. Device for safely recognising the switch position of a rotary switch (1), wherein discrete switch positions of the rotary switch (1) are determined from two analogue actual switch position signal values (2a, 2b) which reflect the switch position angle, each having a predetermined amplitude curve by means of two redundantly configured computer units (4a, 4b) each, with each computer unit (4a, 4b) separately checking the switch positions for plausibility, wherein if the switch positions determined by the first and second computer unit are compared, faulty switch positions are identified, **characterised in that** means are provided such that if the two digitised actual switch position signal values (5a, 5b) are supplied to the first computer unit or if the two digitised actual switch position signal values (5c, 5d) are supplied to the second computer unit in the form of sinusoidal signals phase-shifted with respect to each other by 90°, and the amplitudes of the two signals supplied to the first computer unit (4a) and to the second computer unit (4b) are constant, the plausibility check is performed in such a manner that the signals are deemed to be plausible if the sum of the respective squares of the digitised actual switch position signal values (5a, 5b) supplied to the first computer unit (4a) or the sum of the respective squares of the digitised actual switch position signal values (5c, 5d) supplied to the second computer unit (4b) lies in a predefined range.

2. Method for safely recognising the switch position of a rotary switch (1), wherein discrete switch positions of the rotary switch (1) are determined from two analogue actual switch position signal values (2a, 2b) which reflect the switch position angle, each having a predetermined amplitude curve by means of two redundantly configured computer units (4a, 4b) each, with each computer unit (4a, 4b) separately checking the switch positions for plausibility, wherein if the switch positions determined by the first and second computer unit are compared, faulty switch positions are identified, **characterised in that** if the two digitised actual switch position signal values (5a, 5b) are supplied to the first computer unit or if the two digitised actual switch position signal values (5c, 5d) are supplied to the second computer unit in the form of sinusoidal signals phase-shifted with respect to each other by 90°, and the amplitudes of the two signals supplied to the first computer unit (4a) and to the second computer unit (4b) are constant, the plausibility check is performed in such a manner that the signals are deemed to be plausible if the sum of the respective squares of the digitised actual switch position signal values (5a, 5b) supplied to the first computer unit (4a) or the sum of the respective squares of the digitised actual switch position signal values (5c, 5d) supplied to the second computer unit (4b) lies in a predefined range.

3. Method according to claim 2, **characterised in that** in the case of an unsatisfactory plausibility, the digitised actual switch position signal values (5a, 5b) supplied to the first computer unit (4a) or the digitised actual switch position signal values (5c, 5d) supplied to the second computer unit (4b) are identified as being faulty or the switch positions determined therefrom are identified as being faulty and suitable measures are taken depending on the severity of the error.

4. Method according to claim 2 or 3, wherein the two actual switch position signal values (2a, 2b) are sinusoidal, **characterised in that** switch positions are computed in the form of switch position angles $\alpha$ separately in the first computer unit (4a) through the relationship

$$\alpha = \arctan[X1/Y1],$$

wherein X1 corresponds to the first digitised actual switch position signal value (5a) supplied to the first computer unit (4a) and Y1 corresponds to the second digitised actual switch position signal value (5b) supplied to the first computer unit (4a) and in the second computer unit (4b) through

$$\alpha = \arctan[X2/Y2],$$

wherein X2 corresponds to the first digitised actual switch position signal value (5c) supplied to the second computer unit (4b) and Y2 corresponds to the second digitised actual switch position signal value (5d) supplied to the second computer unit (4b), wherein in each of the computer units (4a, 4b) a phase of the first digitised actual switch position signal value (5a, 5c) lags a phase of the respective second digitised actual switch position signal value (5c, 5d) by 90° and wherein the amplitudes of each of the digitised actual switch position signal values (5a, 5b, 5c, 5d) are constant.

5. Method according to claims 2, 3 or 4, **characterised in that** discrete switch position angles $\alpha_D$ corresponding to the detent positions are determined from the switch position angles $\alpha$ by means of checking in which angular ranges defined according to the detent positions of the rotary switch the switch position angles $\alpha$ lie.

6. Method according to claims 2 to 5, **characterised in that** the computed switch position angles $\alpha$ or the discrete switch position angles $\alpha_D$ are exchanged between the two computer units (4a, 4b) and compared with each other crosswise.

7. Method according to claim 6, **characterised in that** the determined switch positions are identified as being faulty if the comparison indicates an insufficient agreement between the computed switch position angles $\alpha$ or between the discrete switch position angles $\alpha_D$ and suitable measures are taken depending on the severity of the error.

8. Use of the device and the method of one of the preceding claims in an industrial controller.

**Revendications**

1. Dispositif pour détecter avec certitude la position d'un interrupteur rotatif (1), dans lequel des positions discrètes de l'interrupteur rotatif (1) sont déterminées au moyen de deux unités de calcul redondantes (4a, 4b) à partir de deux signaux de valeur réelle de position d'interrupteur analogiques (2a, 2b) reproduisant l'angle de position d'interrupteur et ayant chacun une allure d'amplitude prédéterminée et leur vraisemblance est vérifiée séparément par chaque unité de calcul (4a, 4b) et dans lequel des positions d'interrupteur erronées sont détectées au moyen d'une comparaison des positions d'interrupteur déterminées par la première et par la deuxième unité de calcul, **caractérisé par le fait que** des moyens sont prévus de telle sorte que la vérification de vraisemblance s'effectue de telle sorte, si les deux signaux de valeur réelle de position d'interrupteur numérisés (5a, 5b) sont donnés à la première unité de calcul sous cette forme et les deux signaux de valeur réelle de position d'interrupteur numérisés (5c, 5d) sont donnés à la deuxième unité de calcul sous la forme de signaux sinusoïdaux déphasés de 90° l'un par rapport à l'autre et si les amplitudes des deux signaux vers la première unité de calcul (4a) et vers la deuxième unité de calcul (4b) sont constantes, que l'on constate la vraisemblance des signaux si la somme des carrés respectifs des signaux de valeur réelle de position d'interrupteur numérisés (5a, 5b) vers la première unité de calcul (4a) respectivement la somme des carrés respectifs des signaux de valeur réelle de position d'interrupteur numérisés (5c, 5d) vers la deuxième unité de calcul (4b) se trouve dans une plage définie.

2. Procédé pour détecter avec certitude la position d'un interrupteur rotatif (1), dans lequel des positions discrètes de l'interrupteur rotatif (1) sont déterminées au moyen de deux unités de calcul redondantes (4a, 4b) à partir de deux signaux de valeur réelle de position d'interrupteur analogiques (2a, 2b) reproduisant l'angle de position d'interrupteur et ayant chacun une allure d'amplitude prédéterminée et leur vraisemblance est vérifiée séparément par chaque unité de calcul (4a, 4b) et dans lequel des positions d'interrupteur erronées sont détectées au moyen d'une comparaison des positions d'interrupteur déterminées par la première et par la deuxième unité de calcul, **caractérisé par le fait que** la vérification de vraisemblance s'effectue de telle sorte, si les deux signaux de valeur réelle de position d'interrupteur numérisés (5a, 5b) sont donnés à la première unité de calcul sous cette forme et les deux signaux de valeur réelle de position d'interrupteur numérisés (5c, 5d) sont donnés à la deuxième unité de calcul sous la forme de signaux sinusoïdaux déphasés de 90° l'un par rapport à l'autre et si les amplitudes des deux signaux vers la première unité de calcul (4a) et vers la deuxième unité de calcul (4b) sont constantes, que l'on constate la vraisemblance des signaux si la somme des carrés respectifs des signaux de valeur réelle de position d'interrupteur numérisés (5a, 5b) vers la première unité de calcul (4a) respectivement la somme des carrés respectifs des signaux de valeur réelle de position d'interrupteur numérisés (5c, 5d) vers la deuxième unité de calcul (4b) se trouve dans une plage définie.

3. Procédé selon la revendication 2, **caractérisé par le fait que**, dans le cas d'une vraisemblance insuffisante, les signaux de valeur réelle de position d'interrupteur numérisés (5a, 5b) vers la première unité de calcul (4a) et les signaux de valeur réelle de position d'interrupteur numérisés (5c, 5d) vers la deuxième unité de calcul (4b) sont reconnus comme étant erronés et les positions d'interrupteur déterminées à partir de là sont reconnues comme étant erronées, des mesures appropriées étant prises selon la gravité de l'erreur.

4. Procédé selon la revendication 2 ou 3, les deux signaux de valeur réelle de position d'interrupteur (2a, 2b) étant sinusoïdaux, **caractérisé par le fait que** des positions d'interrupteur sous la forme d'angles de position d'interrupteur α sont calculées séparément par la relation

$$\alpha = \mathrm{arctan}\ [X1\ /\ Y1],$$

X1 correspondant au premier signal de valeur réelle de position d'interrupteur numérisé (5a) vers la première unité de calcul (4a) et Y1 au deuxième signal de valeur réelle de position d'interrupteur numérisé (5b) vers la première unité de calcul (4a), dans la première unité de calcul (4a) et par la relation

$$\alpha = \mathrm{arctan}\ [X2\ /\ Y2],$$

X2 correspondant au premier signal de valeur réelle de position d'interrupteur numérisé (5c) vers la deuxième unité de calcul (4b) et Y2 au deuxième signal de valeur réelle de position d'interrupteur numérisé (5d) vers la deuxième unité de calcul (4b), dans la deuxième unité de calcul (4b), dans chaque unité de calcul (4a, 4b), le premier signal de valeur réelle de position d'interrupteur numérisé (5a, 5c) présentant un retard de phase de 90° par rapport au deuxième signal de valeur réelle de position d'interrupteur numérisé (5c, 5d) respectif et les amplitudes des signaux de valeur réelle de position d'interrupteur numérisés (5a, 5b, 5c, 5d) étant respectivement constantes.

5. Procédé selon la revendication 2, 3 ou 4, **caractérisé par le fait que**, à partir des angles de position d'interrupteur α et au moyen d'une vérification indiquant dans quelles plages angulaires définies conformément aux crans de l'interrupteur rotatif se trouvent les angles de position d'interrupteur α, on détermine des angles de position d'interrupteur discrets $\alpha_D$ correspondant aux crans.

6. Procédé selon l'une des revendications 2 à 5, **caractérisé par le fait que** l'on échange les angles de position d'interrupteur calculés α ou les angles de position d'interrupteur discrets $\alpha_D$ entre les deux unités de calcul (4a, 4b) et que l'on effectue une comparaison croisée.

7. Procédé selon la revendication 6, **caractérisé par**

**le fait que**, si la comparaison donne seulement une coïncidence insuffisante des angles de position d'interrupteur calculés α ou des angles de position d'interrupteur discrets $\alpha_D$, on reconnaît comme étant erronées les positions d'interrupteur déterminées et on prend des mesures appropriées selon la gravité de l'erreur.

8. Utilisation du dispositif et du procédé selon l'une des revendications précédentes dans une commande industrielle.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10009707 A1
- DE 19826875 A1